# EUROPEAN PATENT APPLICATION

(11) **EP 0 980 888 A1**
(43) Date of publication of application: **23.02.2000**
(21) Application number: 99202638.5
(22) Date of filing: 13.08.1999
(51) Int. Cl.: C08J 3/22

(54) **Process for simultaneous colouring and U.V. stabilisation of polymers**

(30) Priority: 14.08.1998 EP 98202734
(71) Applicant: INSTITUUT VOOR AGROTECHNOLOGISCH ONDERZOEK (ATO-DLO), 6700 AA Wageningen (NL)
(72) Inventor: Scott, Elinor, 3813 CA Amersfoort (NL); De Beukelaer, Herman Johan, 6826 JP Arnhem (NL)
(74) Representative: de Bruijn, Leendert C.

(57) **Abstract**

The present invention relates to a process for simultaneous colouring and U.V. stabilisation of polymers. The process comprises colouring and stabilising the polymer with dyed lignin.

With this process different colour shades may be obtained ranging from light shades through to rich dark shades, depending on the concentration of dyed lignin. The polymers e.g. polyolefins obtained have a glossy finish.

Further, the use of the dyed lignin as the pigment composition also gives the polymer that has been coloured a simultaneous enhancement of stability to U.V. radiation.

## Description

The present invention relates to a process for simultaneous colouring and U.V. stabilisation of polymers using the dyed agrofibre component, lignin, as the pigment and stabiliser composition.

The colouring of polyolefins has often proved difficult due to the lack of suitable reactive groups, associated with the polymer, with which dyestuffs can react. Work on the introduction of suitable reactive groups includes chemical modification and co-polymerisation, which can be chemically and technically difficult as well as being expensive. Much work has centred on dyeable additives.

Alternatively, colouring may be achieved using inorganic pigments. Traditionally pigments have been based on heavy metal ion compounds to achieve the desired colour ranges. Some of these pigments contain potentially toxic heavy metal ions e.g. cadmium, mercury etc. which may be undesirable in the product. The toxicity of these pigments must be considered when looking at the use of the product and its disposal (impact on the environment). A great deal of effort, and money, has been injected into the development of new organic pigments for polymeric materials.

It is often difficult to achieve rich dark shades using pigments and the finish of the polymer e.g. polypropylene (PP) is often dulled/matt, although a more glossy finish to the material may be achieved using further products in the recipe (which will increase the price of the product).

It has been found that with the process according to the present invention, which consists of mixing a dyed lignin with a polymer, different colour shades may be obtained ranging from light shades through to rich, darker shades. The process also results in retention of the finish of the virgin polymer.

Lignin is a natural macromolecule containing aromatic units with keto, methoxy and hydroxy substituents. It is found in trees and plants where it plays a role in inhibiting atmospheric degradation by acting as an anti-oxidant and U.V. stabiliser. As well as colouring the polymer, the use of coloured lignin may also act as a potential U.V. stabiliser and anti-oxidant. This offers the advantage that the use of conventional anti-oxidants and U.V. stabilisers can be limited or even completely eliminated.

The uses for lignin are of interest since the material is a natural component of a renewable resource and is produced in large quantities by the pulp and paper industries. It is possible to isolate lignin from tree and other plant materials using a variety of methods. Such a material is commercially available. Preferably a lignin is used that is as light in colour as possible. An example thereof is straw lignin obtained from the soda process.

Another advantage of the invention is that the mechanical properties of the polymer are not adversely affected by incorporating the dyed agrofibre component. Also, when using the dyed agrofibre component lignin in a polymer such as high density polyethylene, HDPE, (with no added stabiliser) the stability of the polymer to U.V. radiation is improved compared to HDPE containing no added stabiliser or lignin.

Any type of reactive dye that is commonly used to dye agrofibres can be used according to the present invention to dye lignin. The chemical and technical knowledge of the dyeing of cellulosic agrofibres is well established. This technique is used, for instance, when dyeing flax linen fibres for use in textiles. Preferably a dye which contains a functionality, which can be reacted with a nucleophile such as a hydroxyl group is used, most preferably, a reactive dye with a n-chloro triazine or vinyl sulphone functionality is used. These dyes have the advantage that they do not contain potential toxic heavy metal ions.

The lignin is dyed by immersing it in a heated aqueous solution of the dye, which will generally contain sodium chloride, for a sufficient amount of time. The lignin is then isolated from the mixture, washed and dried.

The amount of dye used in relation to the lignin is 1 to 20 wt.%, preferably 1g of dye per 16.6g of lignin (6 wt.% dye). This results in dyed lignin of a sufficient colour to allow it to be added to the polymer matrix as the pigment in quantities as low as 1 wt.% with respect to the weight of the total polymeric material.

The dyed lignin may be incorporated in any kind of polymer, but preferably the polymer is a polyolefin. As stated before, the dyed lignin may be incorporated in various amounts, depending on the desired final appearance of the product. In general the coloured polymer obtained according to the present invention will contain 0.1 to 10 wt.% of dyed lignin.

The dyed lignin is incorporated into the polymer matrix by means of any method that is generally used for compounding polymers. These methods include melt-mixing processes such as kneading and extrusion. Processing temperatures depend on the specific polymer used. For instance, polypropylene is processed at about 180°C and acrylonitrile butadiene styrene copolymer (ABS) at about 230°C.

### Example 1

Dyed lignin was prepared as follows. A red n-chloro triazine dye (Procion Red MX-5B) was dissolved in hot water (85°C) to make a 1.25 wt.% solution of the dye in water. Sodium chloride was then added to the water to make a 20 wt.% solution of sodium chloride in water. Cold water was then added to the mixture to increase the volume of the solution to 250% of its original volume. Lignin, isolated from straw, was then added to the dye bath in an amount of 16.6g lignin per 1g dye and the mixture stirred at approx. 85°C for 2hrs. The lignin was then isolated from the dye by filtration under suction and washed with water until the water runs clear. Finally the lignin was dried at 40°C for 180 minutes under vacuum.

The dyed material was then mixed with HDPE, containing no added stabiliser, as follows. A batch mixer, preheated to 180°C is used. Granulate of the HDPE is added to the batch mixer with rotation of the mixing blades. When the polymer is melted (as evidenced from the lower torque of the batch mixer), the desired quantity of dyed lignin is added to the batch mixer. Mixing is continued for a further 8 minutes. After this time the coloured polymer is removed from the mixer, cooled, granulated and injection moulded into the desired form.

The dyed lignin obtained according to this example when mixed with HDPE in various amounts resulted in shades ranging from light pink (1 wt.% dyed lignin) to darker red shades (≥5 wt.% dyed lignin).

It was also found that the presence of the dyed lignin in HDPE, with no added stabiliser, resulted in improved stability of the polymer after exposure to U.V. radiation during an accelerated test (ISO 4892-2). This improved stability was evidenced by looking at the mechanical properties (ISO 178 and ISO 179) of the polymer as a function of U.V. exposure. When compared to the total reduction in stressₘₐₓ of HDPE with no added stabiliser, it was found after 14 days that the total reduction in stressₘₐₓ was reduced by 20% with the presence of 1 wt.% dyed lignin, and 65% with the presence of 5 wt.% dyed lignin. The use of 5 wt. % undyed lignin gives the same result as the use of 5 wt.% dyed lignin. The rate of reduction of the stressₘₐₓ was also shown to decrease with the presence of dyed lignin. Significantly higher values for impact strength of the materials, after exposure to U.V. for 14 days, were also observed for materials that contained dyed lignin compared to the HDPE, containing no added stabiliser.

## Claims

1. Process for simultaneously colouring and stabilising a polymer, wherein dyed lignin is mixed with the polymer.

2. Process according to claim 1 , wherein the dye used for dyeing lignin is a non-heavy metal containing dye.

3. Process according to claim 2, wherein the dye contains a functionality, which can be reacted with a nucleophile such as a hydroxyl group.

4. Process according to claim 3, wherein the dye contains the functionality n-chloro triazine.

5. Process according to any of claims 1 to 4, wherein the polymer is a polyolefin.

6. Coloured polymer obtainable according to any of the claims 1 to 5.

7. Coloured polymer according to claim 6, containing 0.1 to 10 wt% of dyed lignin.
